# EUROPÄISCHE PATENTSCHRIFT

(11) **EP 4 174 115 B1**
(45) Veröffentlichungstag und Bekanntmachung des Hinweises auf die Patenterteilung: **10.12.2025**
(21) Anmeldenummer: 22203915.8
(22) Anmeldetag: 26.10.2022
(51) Int. Cl.: C08J 3/24, C08J 3/28, C08K 5/20, C08K 5/21

(54) **STRAHLENVERNETZUNGSVERSTÄRKER FÜR ALIPHATISCHE POLYAMIDE**
RADIATION CROSS-LINKING BOOSTERS FOR ALIPHATIC POLYAMIDES
AMÉLIORATEUR DE RÉTICULATION PAR RAYONNEMENT POUR LES POLYAMIDES ALIPHATIQUES

(30) Priorität: 27.10.2021 DE 102021127946
(43) Veröffentlichungstag der Anmeldung: 03.05.2023
(73) Patentinhaber: Thüringisches Institut für Textil- und Kunststoff-Forschung e.V., 07407 Rudolstadt (DE)
(72) Erfinder: BLANKENBURG, Lars, 07768 Kahla (DE); AUSTMANN, Henning, 07407 Rudolstadt (DE)
(74) Vertreter: Plate, Jürgen

(56) Entgegenhaltungen:
- EP-A2- 2 380 928
- EP-B1- 2 552 497
- JP-A- 2005 112 925
- US-A- 4 391 537

## Beschreibung

Die Erfindung beschreibt Strahlenvernetzungsverstärker für Polyamide. Die in der Erfindung verwendeten Strahlenvernetzungsverstärker sind bei Raumtemperatur feste, migrationsstabile und thermisch stabile Verbindungen für die Elektronen- und Gammabestrahlung von Bauteilen aus Polyamid. Hierdurch wird es ermöglicht strahlenvernetzte Polyamide in neuen Anwendungsfeldern zu nutzen, wie z.B. in der Lebensmitteltechnik oder neue Verarbeitungsmethoden zu ermöglichen, wie z.B. der Extrusion. Die Aufgabe wird durch die Verwendung von Polyallylamiden gelöst.

Durch die Bestrahlung von Kunststoffbauteilen mit Elektronen- oder Gammastrahlen kommt es zu Brüchen von Polymerketten und zu Quervernetzung zwischen Polymerketten, der sogenannten Gelbildung. Überwiegt der Effekt der Quervernetzung, steigt die kurzfristige Gebrauchstemperatur, die Wärmeformbeständigkeit, die Oberflächenhärte und die Lösemittelbeständigkeit des Kunststoffbauteils. Im Fall von Polyamiden reduziert sich durch Quervernetzung zusätzlich die Feuchtigkeitsaufnahme.

Damit der Effekt der Quervernetzung überwiegt, ist oft der Einsatz von Additiven, sogenannten Strahlenvernetzungsverstärkern, in der Fachliteratur auch als Polyfunctional Monomer (PFM) bezeichnet, erforderlich. Viele der bisher eingesetzten Additive sind gesundheitsschädliche Flüssigkeiten, haben niedrige Dampfdrücke, sind hydrolyseempfindlich, oder migrieren leicht aus den unbestrahlten Compounds und Bauteilen heraus.

In der US 4 391 537 ist ein Verfahren zum Behandeln, insbesondere zum Härten von Bauteilen auf Basis von Polyamid 66 offenbart. Dazu wird das Bauteil längere Zeit eingetaucht in eine Lösung von N,N-Diallyl-acrylamid in wässrigem Methanol. Dann wird es in einer Stickstoffatmosphäre mit Elektronenstrahlen mit einer Energie von mindestens 200.000 eV, bevorzugt mehr als 500.000 eV, bestrahlt.

Gegenstand der EP 2 380 928 A2 ist ein Verfahren zur Herstellung vernetzter Polymere, insbesondere vernetzter Polyamide. Dazu wird Polyamid mit Trisalkenylcyanurat oder Trisalkenylisocyanurat abgemischt und die Mischung extrudiert. Die so hergestellten Formkörper werden dann durch Elektronenstrahlen vernetzt.

In der EP 2 552 497 B1 ist ein Verfahren offenbart zur Sterilisierung von Gegenständen, insbesondere von Wundverbänden, die eine Polymerschicht aufweisen. Die Polymerschicht umfasst eine hydrophobe Matrix aus einem Elastomer und hydrophile polymere Mikropartikel, die in der Matrix dispergiert sind. Die Gegenstände werden mit einer wässrigen Lösung behandelt um die Mikropartikel der Polymerschicht zumindest teilweise aufzuquellen. Sie werden dann mit Elektronenstrahlen behandelt. Die hydrophilen Mikropartikel können vernetzt werden durch Zusatz von Vernetzern, darunter Diallyl- oder Dimethallylamiden. Gegenstand der JP 2005 112925 A sind Zusammensetzungen, die gehärtet sind mit maximal 700 ppm eines Triallylisocyanurats und einer Verbindung mit 2 SiH-Gruppen.

Folgende Additive werden als Strahlenvernetzungsverstärker für die Vernetzung verschiedenster Kunststoffe verwendet, oder sind in der Literatur beschrieben:
Tetraethylenglykol-Diacrylat, Tetraethylengylkol-Dimethacrylat, Diallyladipat, Diallyl-Melanin Dipropenyl-Triamin-Triazin, Trishydroxyethyl-Isocyanur-Acrylat, Trimethallylisocyanurat, Triallylcyanurat, TriethylenglykolDimethacrylat, Trimethylolpropan-Propoxylat-Triacrylat, Butylenglykoldimethacrylat, Ethylendimethacrylat, Triallylphosphat, Polyethylenglykoldimethacrylat, Trimethylolpropan-Ethoxylat-Triacrylat, Pentaerythritoltriacrylat, Pentaerythritoltetraacrylat, Triallyltrimellitat, Hexandioldimethacrylat, Diallylphthalat, Bisphenol A-Dimethacrylatester, Trimethylpropantrimethacrylat, Hexanglykoldiacrylat, Diethylenglykoldimethacrylat, Pentaerythritol-Monohydroxy-Pentaacrylat, Neopentylglykoldiacrylat, Trimethylolpropan-Propan-Trimethacrylat, Divinylbenzol, Tripropylenglykoldiacrylat, Diallylmaleat.

Bisher geht die Fachwelt davon aus, dass für Polyamide mindestens trifunktionelle Strahlenvernetzungsverstärker wie Triallylisocyanurat oder Trimethallylisocyanurat eingesetzt werden müssten.

Für die Polyamide 6 und 66 wird ausschließlich das flüssige Triallylisocyanurat (TAIC) als Vernetzungsverstärker eingesetzt. Das thermisch stabilere und ebenfalls flüssige Trimethallylisocyanurat (TMAIC) findet kaum Verwendung, da seine Reaktivität deutlich geringer ist.

Die Verarbeitung von bei Raumtemperatur flüssigen Additiven wie Triallylisocyanurat oder Trimethallylisocyanurat stellt an die verfügbare Anlagentechnik besondere Anforderungen, wie eine Flüssigdosierung und eine starke Absaugung zur Entfernung von flüchtigen Substanzen aus der Atemluft. Alternativ zur Flüssigdosierung können flüssige Additive mit hohem Arbeitsaufwand auf einen Porösen Träger, z.B. Accurel XP 700 aufgezogen werden.

TAIC hat einen Schmelzpunkt von 25 °C und einen Siedepunkt von 311 °C (101,3 kPa). In der Thermogravimetrischen Analyse (TGA) weist es bei 149 °C einen Masseverlust von 2 % auf. Endanwendungen für strahlenvernetzte Polyamide sind Elektrostecker, die im Spritzguss hergestellt werden. Bei den fertigen Steckern bewirkt eine Elektronenbestrahlung eine Zunahme der kurzfristigen Gebrauchstemperatur und erlaubt so das Löten mit hochschmelzenden, bleifreien Loten.

Lebensmittelkontaktanwendungen und Extrusionsanwendungen wie Rohrextrusion, Filamentextrusion und FFF 3D-Druck können aufgrund der hohen Flüchtigkeit der Additive, der großen Oberflächen in den Prozessen und der langen Verweilzeiten nicht erschlossen werden.

Für Lebensmittelkontaktanwendungen wie Pfannenwender, Topfdeckelknäufe oder Bratpfannengriffe verwendet man bisher Polyethersulfon. Dieser Werkstoff ist mit etwa 16 /kg deutlich teurer als Polyamid 6, welches ca. 3 /kg kostet. Für die Rohrextrusion von Kraftstoffleitungen verwendet man Polyamid 12. Feste, thermisch stabile Vernetzungsverstärker besitzen das Potential, diese Leitungen dünner auszulegen. Für den FFF 3D-Druck von Polyamiden wird Polyamid 12 oder Polyamid 6/66 eingesetzt.

Aufgabe der Erfindung ist es, die Nachteile der aus dem Stand der Technik bekannten Strahlenvernetzungsverstärker für Polyamide zu überwinden und bei Raumtemperatur feste, migrationsstabile und thermisch stabile Vernetzungsverstärker für die Elektronen- und Gammabestrahlung von Bauteilen aus Polyamid zu entwickeln. Hierdurch wird es ermöglicht strahlenvernetzte Polyamide in neuen Anwendungsfeldern zu nutzen, wie z.B. in der Lebensmitteltechnik oder neue Verarbeitungsmethoden zu ermöglichen, wie z.B. die Extrusion.

Die Aufgabe wird durch die Verwendung von Polyallylamiden der Struktur A oder Diallylamiden der Struktur B gelöst. Die Zahl der Allylfunktionalitäten bei Verbindungen der Struktur A beträgt 2, 3 oder 4. Verbindungen der Struktur A lassen sich allgemein durch folgende Formel darstellen:

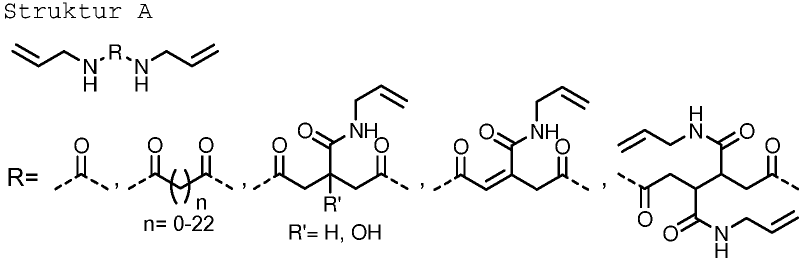

Im speziellen handelt es sich hierbei um Diallylamide der Kohlen,- der Oxal-, der Malon-, der Bernstein-, der Glutar-, und der Adipinsäure. Triallylamide der Citronen-, der Aconit- und der Propantricarbonsäure und das Tetraallylamid der Butantetracarbonsäure. Unter dem Begriff "Polyallylamide" sollen im Zusammenhang mit der vorliegenden Erfindung Verbindungen verstanden werden, die mindestens eine Amidgruppe und zwei oder mehr Allylgruppen enthalten.

Alternativ können Verbindungen der Struktur B genutzt werden, in welchen die Amidgruppe und die Allylgruppe voneinander getrennt in der Struktur vorliegen:

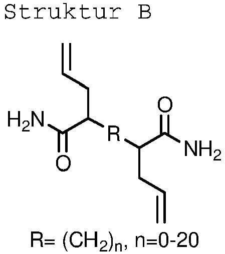

Alle erfindungsgemäßen Verbindungen sind hochschmelzende, leicht zu dosierende Feststoffe. Additive in Polyamiden, welche Primäre und/oder sekundäre Amidbindungen enthalten, migrieren nicht aus dem Werkstoff heraus. Die Unterbindung der Migration beruht auf der Bildung starker Wasserstoffbrückenbindungen zwischen Amidwasserstoffatomen der Amidfunktion des Additivs und den Carbonylgruppen des Polyamidkunststoffs.

Um die Migration sowohl aus dem unbestrahlten als auch aus dem bestrahlten Polyamidobjekt zu unterbinden, enthalten die erfindungsgemäßen Verbindungen primäre und/oder sekundäre Amidgruppen. Die Di-, Tri- und Tetraallylamide tragen an jedem Stickstoffatom der Amidgruppen jeweils mindestens ein zur Ausbildung von Wasserstoffbrückenbindungen befähigtes Wasserstoffatom.

Bisher ging die Fachwelt davon aus, dass für Polyamide mindestens trifunktionelle Strahlenvernetzungsverstärker wie Triallylisocyanurat oder Trimethallylisocyanurat eingesetzt werden müssten. Überraschend wurde gefunden, dass sich auch Diallylamide hervorragend als Strahlenvernetzungsverstärker eignen. Die Allylgruppe kann dabei an die Amidgruppe gebunden sein, wie in Struktur A, oder aber an ein Kohlenstoffatom des Polycarbonsäuregerüstes, wie in Struktur B. Als besonders geeignet haben sich folgende Verbindungen erwiesen: N,N'-Diallylharnstoff, N,N'-Diallyloxalamid, N,N'-Diallylmalonamid, 2,2-Diallylmalonamid, N,N'-Diallylsuccinamid, N,N'-Diallyladipamid, 2,5-Diallyladipamid, N,N',N"-Triallylcitronensäuretriamid, N,N',N"-Triallylpropansäuretriamid, N,N',N"-Triallylaconitsäuretriamid und N,N',N",N‴-Tetraallylbutantetracarboxamid, N,N'-Diallyldodecandiamid, N,N'-Diallyloctadecandiamid. Die freie Hydroxygruppe des N,N',N"-Triallylcitronensäuretriamids kann frei vorliegen oder verethert oder verestert sein. Es kann auch eine Mischung von zwei, drei oder mehreren der vorgenannten Strahlenvernetzungsverstärker verwendet werden.

Mit Ausnahme des thermisch weniger stabilen N,N'-Diallyloxalamids eignen sich alle Verbindungen zur Einarbeitung in Polyamid 6, Polyamid 6/66 und Polyamid 12, sowie teilweise in Polyamid 66. Sowohl bestrahlte als auch unbestrahlte Granulatproben zeigten bei mehrjähriger Lagerung kein Ausschwitzen von Additiven, wodurch die Migrationsstabilität der Additive bestätigt wird.

Die Additive haben ausreichend hohe Schmelzpunkte, sodass es im Einzug des Compoundierextruders nicht zum Blocken der Additive kommen kann. So liegt der Schmelzpunkt von N,N'-Diallylharnstoff bei 98°C, N,N'-Diallyloxalamid bei 158°C, N,N'-Diallylmalonamid bei 147°C, 2,2-Diallylmalonamid bei 201°C, N,N'-Diallylsuccinamid bei 189°C, N,N'-Diallyladipamid bei 160°C und von N,N',N"-Triallylcitronensäuretriamid bei 98°C.

Der Anteil des mindestens einen Strahlenvernetzungsverstärkers liegt bei 1,0 bis 11,0 Gew.-%, bevorzugt bei 2,0 bis 6,0 Gew.-%, besonders bevorzugt bei 3,0 bis 5,0 Gew.-%, jeweils bezogen auf das Gewicht des Polyamids. Die Strahlenvernetzungsverstärker werden mit dem Polyamid vermischt bevor es zu Formkörpern verarbeitet wird.

Durch die Strahlenvernetzungsverstärker können strahlenvernetzbare Compounds in Extrusionsanwendungen, wie Rohr-, Filament- und Folienextrusion, im 3D-Druck und in Lebensmittelkontaktanwendungen eingesetzt werden.

Schwachstellen des FFF-3D-Drucks sind der thermische Verzug und die teilweise schlechte Schichtenhaftung. Daher verwendet man meist Polyamide mit geringer Kristallinität wie Polyamid 6/66 oder Polyamid 12 oder aber mit Cyclohexandimethanol copolymerisiertes Polyethylenterephthalat (PETG). Diese Werkstoffe sind aber hinsichtlich ihrer Einsatztemperaturen Polyamid 6 unterlegen. Bei im Schmelzschichtverfahren hergestellten Bauteilen aus geeigneten Compounds bewirkt die Bestrahlung eine Zunahme der Schichtenhaftung. Die Schichtenhaftung von Polyamid 6 ist aufgrund seiner hohen Kristallisationsgeschwindigkeit sehr schlecht.

Schichtenhaftungswerte für andere Materialien, die im gleichen Drucksystem verarbeitet wurden, betragen zwischen 25 - 50 MPa, bei PA6 liegt dieser Wert bei ca. 5 - 6 MPa. Die Bestrahlung erhöhte die Schichtenhaftung um bis zu 23 %.

Wird beispielsweise bei Polyamid 6 die Wärmeformbeständigkeit durch Bestrahlung von 130 °C auf 209 °C erhöht, lässt sich dieser Werkstoff als Ersatz für Hochleistungskunststoffe einsetzen.

Ein erhöhter Gelanteil bewirkt bei vernetzten Polyamiden eine geringere Wasseraufnahme und eine höhere Beständigkeit gegen organische Lösungsmittel wie Benzylalkohol oder m-Kresol. Die Glasübergangstemperatur von vernetzten Polyamiden steigt mit dem Gelanteil und ist ein thermischer Indikator dafür, wie gut das Vernetzungsergebnis ist.

Bei teilkristallinen Werkstoffen wie Polyamid 6 erhöht sich der Anteil der Grenzflächen zwischen amorphen und kristallinen Bereichen, wenn man Nukleierungsmittel zugibt. Da die Strahlenvernetzung nur in den amorphen und in den Grenzbereichen stattfindet, erhöht sich der Gelanteil durch Zugabe von Nukleierungsmitteln. Dieser Effekt ist für das bekannte System TAIC/PA6 hinlänglich bekannt. Die erfindungsgemäßen Vernetzungsverstärker zeigen diesen Effekt ebenfalls.

Phosphite wie Irgafos^{®} 168 oder Weston^{®} 618f tragen zur Stabilisierung während der Bestrahlung unter Luftsauerstoff bei, phenolische Antioxidantien wie Irganox^{®} 1098 hingegen verhindern die Vernetzung. Dies konnte in Versuchen nachgewiesen werden.

Im Gegensatz zur peroxidischen Vernetzung haben aromatische Ringsysteme einen negativen Einfluss auf das Vernetzungsergebnis, da sie Strahlung absorbieren und so die Strahlendosis senken. Der Gelanteil vernetzter Proben, die Irgafos 168 enthalten, ist daher etwas geringer. Idealerweise werden aliphatische Phosphite wie Weston^{®} 618f verwendet.

Für die Extrusion von Rohren und Filamenten für den 3D-Druck aus Polyamid 12 eignen sich besonders die thermisch stabileren Additive N,N'-Diallylsuccinamid und N,N'-Diallyladipamid. Der preiswert herzustellende Diallylharnstoff ist sehr gut für Spritzgussanwendungen aus Polyamid 6 geeignet, z.B. Elektrostecker.

Für Bratpfannengriffe aus vernetztem Polyamid 6 eignen sich Verbindungen, die zu Bauteilen mit besonders hoher Wärmeformbeständigkeit führen, insbesondere N,N',N"-Triallylcitronensäuretriamid und N,N',N",N‴-Tetraallyltetracarboxamid.

Die nachfolgenden Beispiele dienen zur Erläuterung der Erfindung. Prozente sind darin als Gewichtsprozente zu verstehen, soweit nicht anders angegeben oder aus dem Zusammenhang ersichtlich.

### Bestimmung des Gelanteils

Die Bestimmung des vernetzten Anteils der Proben erfolgte in Analogie zu DIN EN ISO 10147:2013 mit den Lösemitteln Ameisensäure (GA) und Benzylalkohol (GB).

### Herstellung von Vernetzungsverstärkern

Die Synthese von N,N'-Diallylharnstoff (DAU) erfolgt mit Allylamin und Carbonyldiimidazol nach der Vorschrift von C. Iacobucci, C. Piotrowski, A. Rehkamp, C.H. Ihling, C. Hage, A. Sinz, "The First MS-Cleavable, Photo-Thiol-Reactive Cross-Linker for Protein Structural Studies" J. Am. Soc. Mass Spectrom. 2019, 30, 1, 139-148 (Supplementary Information). Die Synthese von N,N'-Diallyloxalamid (DAO) erfolgt aus Diethyloxalat und Allylamin nach der Vorschrift von S. Coufourier, Q.G. Gaillard, J.-F. Lohier, A. Poater, S. Gaillard, J.-L. Renaud, "Hydrogenation of CO2, Hydrogenocarbonate and Carbonate to Formate in Water using Phosphine Free Bifunctional Iron Complexes", ACS catalysis, 2020, 10, 3, 2108-2116 (Supporting Information S.6). Die Synthese von N,N'-Diallylmalonamid (DAM) erfolgt aus Diethylmalonat und Allylamin angepasst nach N. Biçak, S. Karao 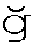 lan, B.F. 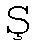 enkal, Angew. Makromol. Chem. 255 (1998) 13-16. Die Synthese von 2,2-Diallylmalonamid (DAM*) ist mehrstufig. Zunächst wird Diethyldiallylmalonat alkalisch zur freien Säure verseift, Klaus Schwetlick u. a.: Organikum. 22. Auflage. Wiley-VCH, Weinheim 2009, S. 489f. In einem zweiten Schritt wird die Säure in ihr Chlorid überführt, dies geschieht mit Thionylchlorid nach Klaus Schwetlick u. a.: Organikum. 22. Auflage. Wiley-VCH, Weinheim 2009, S. 498f. Im letzten Schritt wird das Säurechlorid mit Ammoniak zum 2,2-Diallylmalonamid umgesetzt, Klaus Schwetlick u. a.: Organikum. 22. Auflage. Wiley-VCH, Weinheim 2009, S. 484f. Die Synthese von N,N'-Diallylsuccinamid (DAS) erfolgt aus Diethylsuccinat und Allylamin angepasst analog nach N. Biçak, S. Karao 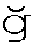 lan, B.F. 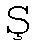 enkal, Angew. Makromol. Chem. 255 (1998) 13-16. Die Synthese von N,N',N"-Triallylcitronensäuretriamid (TACT) gelingt nach abgewandelter Vorschrift aus EP 1 174 026 A2. Dabei werden Triethylcitrat mit Allylamin umgesetzt.

### Verwendete Materialien

Alle eingesetzten Materialien haben in Europa eine Lebensmittelkontaktzulassung (Listung in Anhang I EU 10/2011), außer Weston^{®} 618F, dieses ist noch nicht vollständig zugelassen.

### Polymere

### Polyamid 6

Zum Einsatz kommt Alphalon^{™} 33 von Grupa Azoty Tarnow. Das Polyamid enthält keinerlei Additive, auch keine sauren Regler. Die relative Viskosität (ISO 307) beträgt 3,3 (1% in 96% H₂SO₄), der Schmelzpunkt (ISO 3146) 220 °C.

### Polyamid 6/66

Für vergleichende Versuche im 3D-Druck, insbesondere zur Bestimmung der Schichtenhaftung und der Wärmeformbeständigkeit nach dem Stand der Technik wurde Ultramid^{®} C33 von BASF verwendet. Die relative Viskosität (ISO 307) beträgt 3,3 (1% in 96% H₂SO₄), der Schmelzpunkt (ISO 3146) 196 °C. Als Masterbatch Carrier wurde das niedrigschmelzende Ultramid^{®} C37LC von BASF eingesetzt. Die relative Viskosität (ISO 307) beträgt 3,59 - 3,81 (1% in 96% H₂SO₄), der Schmelzpunkt (ISO 3146) 181 °C.

### EMA-Copolymere

Als Masterbatch-Carrier wurden die Ethylen-Methylacrylate Elvaloy^{™} AC 12024S und Elvaloy^{™} AC 1224 von Dow eingesetzt. Elvaloy AC 12024S^{™} enthält aminische und/oder phenolische Stabilisatoren, Elvaloy^{™} AC 1224 ist stabilisatorfrei. Die Schmelzflussrate (MFR, ISO 1133) von Elvaloy^{™} AC 1224 beträgt 2 g/10 min, die von Elvaloy^{™} AC 12024S beträgt 20 g/10 min. Der Schmelzpunkt (ISO 3146) beider Materialien ist 91°C.

### Additive

Irgafos^{®} 168 von BASF ist ein hydrolytisch stabiles Phosphit mit einem Schmelzbereich von 183 - 186 °C und einem Phosphorgehalt von 4,6 %. Das Phosphit Weston^{®} 618F von addivant schmilzt bei 37-46°C und hat einen Phosphorgehalt von 4,1 %. Irganox^{®} 1098 von BASF ist ein migrationsstabiles, primäres, phenolisches Antioxidans, das in Polyamiden eingesetzt wird. Es hat einen Schmelzbereich von 156 - 161 °C.

Microtalc IT extra von Mondo Minerals ist ein hydratisiertes Magnesiumsilikat mit der Formel Mg₃Si₄O₁₀(OH)₂. Mit einer Korngrößenverteilung von D₉₈ 6,5 µm wird es als Nukleierungsmittel in teilkristallinen Werkstoffen eingesetzt, um die Sphärulitgrößenverteilung günstig zu beeinflussen und die makroskopische Rekristallisationstemperatur der Polymerschmelze anzuheben. Dadurch verkürzt sich die bis zum Entformen notwendige Kühlzeit im Spritzgießprozess.

### Beispiel 1:

3,8 % N,N'-Diallylharnstoff und 0,1 % Irgafos^{®} 168 wurden auf einem Extruder der Marke ZSK-25 von Werner & Pfleiderer in Alphalon^{®} 33 eincompoundiert und aus diesem Compound wurden Platten der Maße 100 mm x 100 mm x 2 mm im Spritzguss hergestellt. Aus diesen Platten wurden Vielzweckprüfkörper vom Typ 5A (DIN EN ISO 527-2) gefräst. Diese 5A-Probekörper wurden mit Betastrahlen einer Energie von 10 MeV eines Resonanzbeschleunigers vom Typ Rhodotron^{®} mit 0, 33, 66, 99, 132 und 165 kGy bestrahlt. An den Probekörpern wurden die Zugfestigkeit und die Bruchdehnung bestimmt (DIN EN ISO 527). Aus den Probekörpern wurden außerdem 0,2 mm Späne gewonnen, um den Gelanteil mit Ameisensäure zu bestimmen (GA)

| | | | | | | |
|---|---|---|---|---|---|---|
| Dosis [kGy] | 0 | 33 | 66 | 99 | 132 | 165 |
| Gelanteil [%] | 0 | 0 | 37,3 | 65,1 | 67,9 | 73,2 |
| Zugfestigkeit [MPa] | 87,3 | 95, 7 | 107 | 119 | 118 | 125 |
| Bruchdehnung [%] | 206 | 198 | 189 | 172 | 152 | 121 |

Wie erwartet stiegen die Zugfestigkeit und der Gelanteil mit zunehmender Dosis an, die Bruchdehnung nahm ab.

### Beispiel 1a:

30 % N,N'-Diallylharnstoff wurde auf einem Extruder der Marke ZSK-25 von Werner & Pfleiderer in Elvaloy^{®} AC 12024S eincompoundiert (Masterbatch 1). 12,7 % Masterbatch 1 und 0,1 % Irgafos^{®} 168 wurden auf einer ZSK-25 von Werner & Pfleiderer in Alphalon^{®} 33 eincompoundiert und aus diesem Compound wurden Platten der Maße 100 mm x 100 mm x 2 mm und Stabprobekörper Typ B (80 mm x 10 mm x 4 mm, DIN EN ISO 20753) im Spritzguss hergestellt. Aus den Platten wurden Vielzweckprüfkörper vom Typ 5A (DIN EN ISO 527-2) gefräst, sowie Prüfkörper zur Durchführung der Dynamisch Thermisch Mechanischen Analyse, 80 mm x 10 mm x 2 mm.

Die Probekörper wurden mit Betastrahlen einer Energie von 10 MeV eines Resonanzbeschleunigers vom Typ Rhodotron^{®} mit 0, 33, 66, 99, 132 und 165 kGy bestrahlt. An diesen Probekörpern wurden die Zugfestigkeit, die Bruchdehnung, die Wärmeformbeständigkeit nach DIN EN ISO 75-2, Methode B (0,45 MPa) und der Glasübergang bestimmt.

Aus den Probekörpern wurden außerdem 0,2 mm Späne gewonnen, um den Gelanteil mit Ameisensäure zu bestimmen (GA)

| | | |
|---|---|---|
| Dosis [kGy] | 0 | 33 |
| Gelanteil [%] | 6,8 | 11, 2 |
| Streckspannung [MPa] | 44,4 | 47,4 |
| Bruchdehnung [%] | 134 | 103 |
| Glasübergang [°C] | 59,5 | 67,3 |
| HDT/B [°C] | 85,8 | 112 |

Für die Dosen 66, 99, 132, 165 kGy konnte keine weitere Steigerung des Gelanteils festgestellt werden, was auf aminische und/oder phenolische primäre Antioxidantien im Elvaloy AC 12024S zurückzuführen ist. Da Elvaloy AC in Ameisensäure unlöslich ist, enthält auch die 0 kGy Probe unlösliche Anteile. Der Vergleich der Dosen 0 und 33 kGy zeigte eine deutliche Zunahme der Wärmeformbeständigkeit.

### Beispiel 1b:

30 % N,N'-Diallylharnstoff wurde auf einem Extruder der Marke ZSK-25 von Werner & Pfleiderer in Ultramid^{®} C37LC eincompoundiert (Masterbatch 2).

12,7 % Masterbatch 2 wurde zusammen mit diversen Additiven in Alphalon 33 eincompoundiert. Die genaue Zusammensetzung kann folgender Tabelle entnommen werden:

| Compound | AO 168^{a} [%] | AO 1098^{b} [%] | AO 18F^{c} [%] | Microtalc ^{d} [%] | Masterbatch 2 [%] | Alphalon ^{e} [%] |
|---|---|---|---|---|---|---|
| C37LC_4 | - | - | - | - | 12,7 | 87,3 |
| C37LC_2 | 0,1 | - | - | - | 12,7 | 87,2 |
| C37LC_3 | 0,1 | - | - | 0,1 | 12,7 | 87,1 |
| C37LC_5 | 0,1 | 0,1 | - | 0,1 | 12,7 | 87,0 |
| C37LC_6 | - | - | 0,1 | 0,1 | 12,7 | 87,1 |

| | | | | | | |
|---|---|---|---|---|---|---|
| ^{a}Irgafos 168 ^{b} Irganox 1098 ^{c} Weston 618F ^{d}Microtalc IT extra ^{e} Alphalon 33 | | | | | | |

Es wurden Platten 100 mm x 100 mm x 2 mm und Stabprobekörper Typ B (80 mm x 10 mm x 4 mm DIN EN ISO 20753) im Spritzguss hergestellt. Aus den Platten wurden Vielzweckprüfkörper vom Typ 5A (DIN EN ISO 527-2) gefräst, sowie Prüfkörper zur Durchführung der Dynamisch Thermisch Mechanischen Analyse. Die Probekörper wurden mit Betastrahlen eines Resonanzbeschleunigers vom Typ Rhodotron^{®} mit 0, 33, 66, 99, 132 und 165 kGy bestrahlt. An diesen Probekörpern wurden die Zugfestigkeit, die Wärmeformbeständigkeit nach DIN EN ISO 75-2, Methode B (0,45 MPa) und der Glasübergang bestimmt. Es wurde Granulat bestrahlt und der Gelanteil mit Benzylalkohol (GB) bestimmt.

| Compound | Dosis [kGy] / Zugfestigkeit [MPa] | | | | | |
|---|---|---|---|---|---|---|
| | 0 | 33 | 66 | 99 | 132 | 165 |
| C37LC_4 | 52,3 | 43,8 | 42,8 | 48,1 | 48,6 | 48,9 |
| C37LC_2 | 51,5 | 42,5 | 39,8 | 47,4 | 51,6 | 50,7 |
| C37LC_3 | 50,9 | 50,8 | 51,2 | 53,6 | 53,6 | 54,8 |
| C37LC_5 | 51,7 | 47 | 46,4 | 48,6 | 51,6 | 50,2 |
| C37LC_6 | 55,4 | 49,4 | 48,2 | 51,1 | 52,8 | 53 |

Die Zugfestigkeit weist zwischen 0 kGy und 33 kGy einen Abfall von bis zu 10 MPa auf. Dieser Abfall wird bei höheren Dosen aber durch die zunehmende Vernetzung wieder ausgeglichen. Keinen Abfall der Zugfestigkeit zeigt die Formulierung C37LC_3.

| Compound | Dosis [kGy] / HDT/B [°C] | | | | | |
|---|---|---|---|---|---|---|
| | 0 | 33 | 66 | 99 | 132 | 165 |
| C37LC_4 | 150 | 145 | 142 | 155 | 154 | 159 |
| C37LC_2 | 151 | 150 | 155 | 158 | 157 | 154 |
| C37LC_3 | 160 | 160 | 163 | 169 | 168 | 169 |
| C37LC_5 | 150 | 161 | 167 | 166 | 169 | 170 |
| C37LC_6 | 163 | 153 | 157 | 156 | 176 | 171 |

Die Wärmeformbeständigkeit der zusätzlich stabilisierten Formulierungen (C37LC_2, 3, 5) steigt mit zunehmender Dosis kontinuierlich an.

| Compound | Dosis [kGy] / Gelanteil [%] | | | | | |
|---|---|---|---|---|---|---|
| | 0 | 33 | 66 | 99 | 132 | 165 |
| C37LC_4 | 0,8 | 22,5 | 63,3 | 78,9 | 93,0 | 92,7 |
| C37LC_2 | 0 | 45,6 | 52,7 | 83,9 | 94,0 | 97,6 |
| C37LC_3 | 0 | 50,3 | 76,3 | 86,6 | 93,1 | 95,2 |

Die Tabelle zeigt die Zunahme des Gelanteils mit zunehmender Dosis. Die besten Werte lieferte die nukleierte Formulierung C37LC_3.

### Beispiel 2:

4,9 % N,N'-Diallylmalonamid und 0,1 % Irgafos 168 wurde auf einem Extruder der Marke ZSK-25 von Werner & Pfleiderer in Alphalon 33 eincompoundiert und aus diesem Compound wurden Platten der Maße 100 mm x 100 mm x 2 mm und Stabprobekörper Typ B (80 mm x 10 mm x 4 mm, DIN EN ISO 20753 ) im Spritzguss hergestellt. Aus den Platten wurden Vielzweckprüfkörper vom Typ 5A (DIN EN ISO 527-2) gefräst, sowie Prüfkörper zur Durchführung der Dynamisch Thermisch Mechanischen Analyse, 80 mm x 10 mm x 2 mm.

Die Probekörper wurden mit Betastrahlen eines Resonanzbeschleunigers vom Typ Rhodotron^{®} mit 0, 33, 66, 99, 132 und 165 kGy bestrahlt. An diesen Probekörpern wurden die Zugfestigkeit, die Bruchdehnung und die Wärmeformbeständigkeit nach DIN EN ISO 75-2, Methode B (0,45 MPa) bestimmt.

Aus den Probekörpern wurden außerdem 0,2 mm Späne gewonnen, um den Gelanteil mit Ameisensäure zu bestimmen (GA)

| | | | | | | |
|---|---|---|---|---|---|---|
| Dosis [kGy] | 0 | 33 | 66 | 99 | 132 | 165 |
| Gelanteil [%] | 0 | 26, 5 | 50,2 | 62,5 | 56,9 | 61,6 |
| Zugfestigkeit [MPa] | 87,9 | 108 | 120 | 124 | 134 | nb |
| Bruchdehnung [%] | 186 | 207 | 89,7 | 93,5 | nb | 46,2 |

Ab 99 kGy konnte keine weitere Steigerung des Gelanteils festgestellt werden. Mit Bestimmungsmethode B wird bei höheren Dosen eine weitere Steigerung des Gelanteils beobachtet.

| | | | |
|---|---|---|---|
| Dosis [kGy] | 99 | 132 | 165 |
| Gelanteil [%] | 79,4 | 86, 0 | 92,6 |

Die Bruchdehnung steigt mit höherer Dosis zunächst leicht an und fällt dann ab. Die Zugfestigkeit steigt mit der Dosis kontinuierlich an.

### Beispiel 3:

5,2 % N,N'-Diallylsuccinamid und 0,1 % Irgafos^{®} 168 wurde auf einem Extruder der Marke ZSK-25 von Werner & Pfleiderer in Alphalon^{®} 33 eincompoundiert. Das Compound wurde mit Betastrahlen eines Resonanzbeschleunigers vom Typ Rhodotron^{®} mit 0, 33, 66, 99, 132 und 165 kGy bestrahlt und der Gelanteil mit Benzylalkohol (GB) bestimmt.

| | | | | | | |
|---|---|---|---|---|---|---|
| Dosis [kGy] | 0 | 33 | 66 | 99 | 132 | 165 |
| Gelanteil [%] | 0 | 84 ,8 | 91,7 | 95,6 | 96,5 | 96,0 |

Bereits mit geringen Dosen konnten im Compound hohe Gelanteile erzielt werden.

### Beispiel 4:

3,7 % N,N',N"-Triallylcitronensäuretriamid und 0,1 % Irgafos^{®} 168 wurde auf einem Extruder der Marke ZSK-25 von Werner & Pfleiderer in Alphalon^{®} 33 eincompoundiert und aus diesem Compound wurden Platten 100 mm x 100 mm x 2 mm und Stabprobekörper Typ B(80 mm x 10 mm x 4 mm, DIN EN ISO 20753 ) im Spritzguss hergestellt. Aus den Platten wurden Vielzweckprüfkörper vom Typ 5A (DIN EN ISO 527-2) gefräst. Die Probekörper und Granulatproben wurden mit Betastrahlen eines Resonanzbeschleunigers vom Typ Rhodotron^{®} mit 0, 33, 66, 99, 132 und 165 kGy bestrahlt. An diesen Probekörpern wurden die Zugfestigkeit und die Wärmeformbeständigkeit nach DIN EN ISO 75-2, Methode B (0,45 MPa) bestimmt.

An den Granulatproben wurde der Gelanteil mit Benzylalkohol zu bestimmt (GB).

| | | | | | | |
|---|---|---|---|---|---|---|
| Dosis [kGy] | 0 | 33 | 66 | 99 | 132 | 165 |
| Streckspannung [MPa] | 51 | 39, 9 | 41, 6 | 44, 7 | 44,5 | 45, 4 |
| HDT/B [°C] | 130 | 129 | 147 | 159 | 136 | 209 |

Es konnte eine Wärmeformbeständigkeit von 209 °C erreicht werden.

### Beispiel 5:

In diesem Beispiel wird die Wirkung von Betastrahlen eines Resonanzbeschleunigers vom Typ Rhodotron^{®} auf die mechanischen Eigenschaften von 3D-gedruckten Bauteilen untersucht, die im Schmelzschichtverfahren (FFF, FDM^{®}) mit einem Felix Pro 1 der Firma Felix Printers hergestellt wurden.

Dazu wurden Compounds auf einer ZSK-25 von Werner & Pfleiderer hergestellt.

Compound 1 bestand aus 5,2 % N,N'-Diallylsuccinamid, 0,1 % Irgafos^{®} 168 und 0,1 % Microtalc IT extra in Alphalon^{®} 33. Compound 2 bestand aus 0,1 % Irgafos^{®} 168 und 0,1 % Microtalc IT extra in Alphalon 33.

Aus Compound 1 wurde Filament 1 und aus Compound 2 Filament 2 auf einer Filamentextrusionsanlage hergestellt. Beide Filamente hatten einen Durchmesser von 1,75 mm.

Der Probekörper zur Ermittlung der Streckspannung in der Schichtebene (xy-Richtung) ist ein liegend gedruckter Zugstab vom Typ ISO 27-1 1A. Der Probekörper zur Ermittlung der Streckspannung senkrecht zur Schicht (z-Richtung, Schichtenhaftung) ist ein Zugstab vom Typ ISO 527-1 1A, bei dem der lineare Prüfabschnitt von 80 mm auf 0,4 mm verkürzt wurde, und der aufrecht stehend gedruckt wurde. Von beiden Probekörpern wurden jeweils 5, kreuzförmig angeordnete Exemplare gleichzeitig gedruckt.

Die virtuellen Modelle wurden mit der Software Inventor von Autodesk erstellt und im Dateiformat Surface Tesselation Language, .stl gespeichert.

Die .stl-Dateien wurden mit der Software Simplify3D in den .GCODE für den Drucker überführt. Die wichtigsten Einstellungen zum Drucken der Probekörper waren eine Druckgeschwindigkeit von 50 m/s, eine Düsentemperatur von 250 °C, eine Schichtstärke von 0,2 mm, ein Infill von 100 %, 3 Outlines. Der Düsendurchmesser war 0,5 mm. Die Probekörper wurden jeweils mit 99 kGy bestrahlt:

| | Filament 1 | Filament 2 (ohne Bestrahlung) |
|---|---|---|
| Schichtenhaftung, Streckspannung, z [MPa] | 7,4 | 6 |
| Streckspannung xy [MPa] | 105 | 51 |

Die Schichtenhaftung in der z-Ebene konnte um 23 % gesteigert werden. In der xy-Ebene sogar um mehr als 100 %.

### Beispiel 6:

In diesem Beispiel wird die thermische Stabilität der Additive mittels Thermogravimetrischer Analyse (TGA) untersucht. Die Heizrate beträgt 10 K/min, es wurde unter Stickstoffatmosphäre gearbeitet. Die Werte für einen Masseverlust von 2 % werden angegeben. Dabei bedeuten: DAU N,N'-Diallylharnstoff, DAO N,N'-Diallyloxalamid, DAM N,N'-Diallylmalonamid, DAM* 2,2-Diallylmalonamid, DAS N,N'-Diallylsuccinamid, DAA N,N'-Diallyladipamid, TACT N,N',N"-Triallylcitronamid, TABT N,N',N",N‴-Tetraallylbutantetracarboxamid

| Verbindung | DAU | DAO | DAM | DAM* | DAS | DAA | TACT | TABT |
|---|---|---|---|---|---|---|---|---|
| 2 % Masseverlust | 149 | 135,5 | 183,7 | 183,7 | 186,5 | 223,4 | 229 | 275 |

Da die TGA von DAA, TACT und TABT höher ist als der Schmelzpunkt von Polyamid 6 (220 °C), eignen sich beide Verbindungen für Lebensmittelkontaktanwendungen.

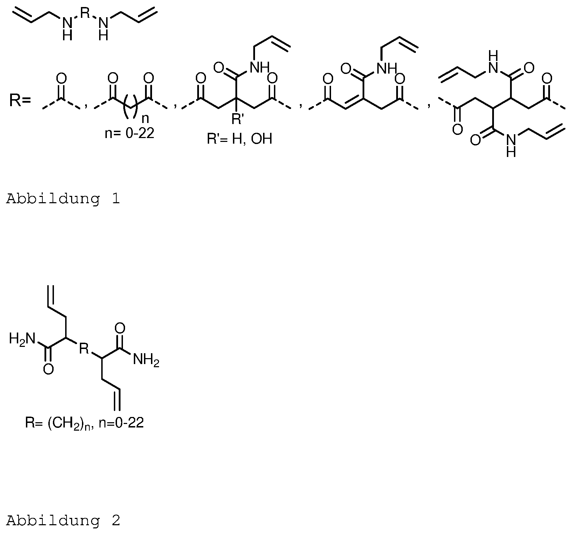

## Patentansprüche

1. Verwendung von Verbindungen die Allylgruppen und Amidgruppen enthalten, bei denen die Allylgruppe direkt an das Amid gebunden ist, gemäß der folgenden Formel (A): 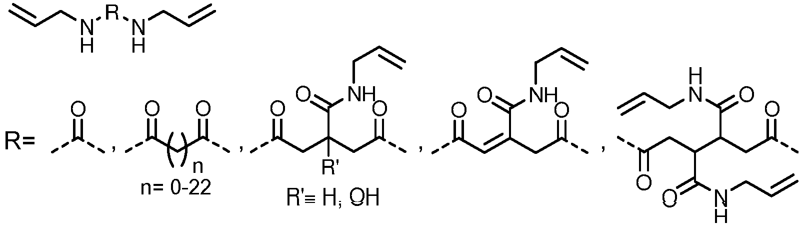 oder bei denen die Amidgruppe und die Allylgruppe räumlich getrennt voneinander vorliegen, gemäß der folgenden allgemeinen Formel (B): 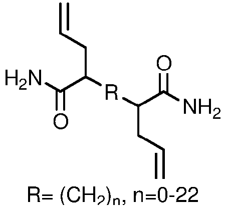 als Vernetzungsverstärker in der Beta- oder Gammastrahlenvernetzung von aliphatischen Polyamiden, wobei die als Strahlenvernetzungsverstärker wirkenden Additive in einem Anteil von 1,0 bis 11,0 Gew.-%, bezogen auf das Gewicht des aliphatischen Polyamids, eingesetzt werden.

2. Verwendung von Verbindungen der Formel A nach Anspruch 1, **dadurch gekennzeichnet, dass** die Verbindungen Allylamide der Kohlen-, der Oxal-, der Malon-, der Bernstein-, der Adipin-, der Citronen-, oder der Butantetracarbonsäure sind, speziell N,N'-Diallylharnstoff, N,N'-Diallyloxalamid, N,N'-Diallylmalonamid, N,N'-Diallylsuccinamid, N,N'-Diallyladipamid, N,N',N"-Triallylcitronensäuretriamid, N,N',N'',N‴-Tetraallylbutantetracarboxamid, N,N'-Diallyldodecandiamid oder N,N'-Diallyloctadecandiamid.

3. Verwendung von Verbindungen der Formel B nach Anspruch 1, **dadurch gekennzeichnet, dass** die Verbindungen 2,2-Diallylmalonamid und/oder 2,5-Diallyladipamid sind.

4. Verwendung von Verbindungen der Formel (A) oder (B) nach Anspruch 1 als Vernetzungsverstärker in der Beta- oder Gammastrahlenvernetzung von aliphatischen Polyamiden in der Compoundierung, im Spritzguss und im 3D-Druck von aliphatischen Polyamiden.

5. Verwendung gemäß einem oder mehreren der Ansprüche 1 bis 4, **dadurch gekennzeichnet, dass** die als Strahlenvernetzungsverstärker wirkenden Additive in einem Anteil von 2,0 bis 6,0 Gew.-%, bevorzugt von 3,0 bis 5,0 Gew.-%, jeweils bezogen auf das Gewicht des aliphatischen Polyamids, eingesetzt werden.

6. Verwendung gemäß einem oder mehreren der Ansprüche 1 bis 5, **dadurch gekennzeichnet, dass** die Additive zur Strahlenvernetzung von Polyamid 6, Polyamid 66, Polyamid 6/66 oder Polyamid 12 verwendet werden.

7. Verwendung nach einem oder mehreren der Ansprüche 1 bis 6, **dadurch gekennzeichnet, dass** neben den Strahlenvernetzungsverstärkern weitere Additive zugesetzt werden, insbesondere Prozessstabilisatoren wie Phosphite und/oder Nukleierungsmittel.

## Claims

1. Use of compounds which contain allyl groups and amide groups and in which the allyl group is bonded directly to the amide, according to the following formula (A): 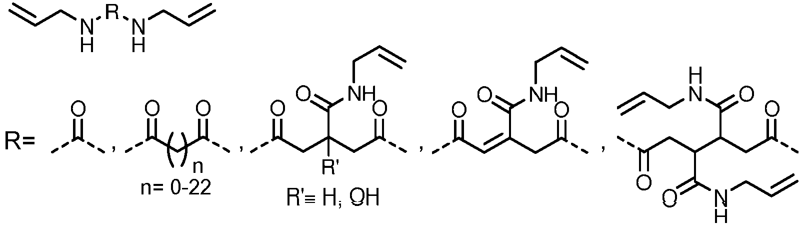 or in which the amide group and the allyl group are present spatially separated from one another, according to the following general formula (B): 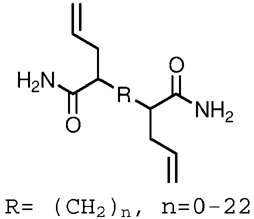 as crosslinking boosters in the beta or gamma radiation crosslinking of aliphatic polyamides, wherein the additives acting as radiation crosslinking boosters are used in a proportion of 1.0% to 11.0% by weight, in relation to the weight of the aliphatic polyamide.

2. Use of compounds of the formula A according to Claim 1, **characterized in that** the compounds are allyl amides of carbonic, oxalic, malonic, succinic, adipic, citric or butanetetracarboxylic acid, especially N,N'-diallylurea, N,N'-diallyloxalamide, N,N'-diallylmalonamide, N,N'-diallylsuccinamide, N,N'-diallyladipamide, N,N' ,N"-triallylcitric acid triamide, N,N',N",N‴-tetraallylbutanetetracarboxamide, N,N'-diallyldodecanediamide or N,N'-diallyloctadecanediamide.

3. Use of compounds of the formula B according to Claim 1, **characterized in that** the compounds are 2,2-diallylmalonamide and/or 2,5-diallyladipamide.

4. Use of compounds of the formula (A) or (B) according to Claim 1 as crosslinking boosters in the beta or gamma radiation crosslinking of aliphatic polyamides in the compounding, in the injection moulding and in the 3D printing of aliphatic polyamides.

5. Use according to one or more of Claims 1 to 4, **characterized in that** the additives acting as radiation crosslinking boosters are used in a proportion of 2.0% to 6.0% by weight, preferably of 3.0% to 5.0% by weight, each in relation to the weight of the aliphatic polyamide.

6. Use according to one or more of Claims 1 to 5, **characterized in that** the additives are used for the radiation crosslinking of polyamide 6, polyamide 66, polyamide 6/66 or polyamide 12.

7. Use according to one or more of Claims 1 to 6, **characterized in that**, in addition to the radiation crosslinking boosters, further additives are added, more particularly process stabilizers such as phosphites and/or nucleating agents.

## Revendications

1. Utilisation de composés contenant des groupes allyle et des groupes amide dans lesquels le groupe allyle est directement lié à l'amide, selon la formule (A) suivante : 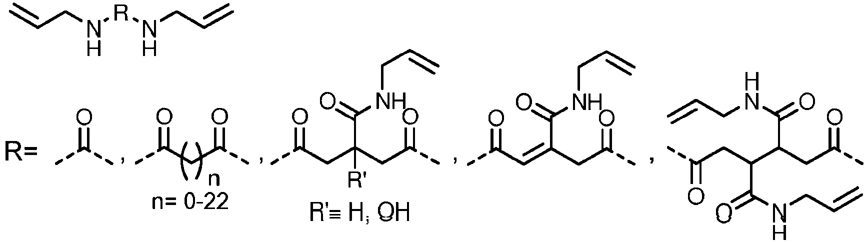 ou dans lesquels le groupe amide et le groupe allyle sont séparés spatialement l'un de l'autre, selon la formule générale (B) suivante : 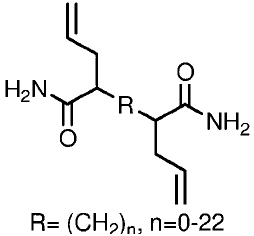 en tant que promoteurs de réticulation dans la réticulation par rayonnement bêta ou gamma de polyamides aliphatiques, les additifs agissant en tant que promoteurs de réticulation par rayonnement étant utilisés en une proportion de 1,0 à 11,0 % en poids, par rapport au poids du polyamide aliphatique.

2. Utilisation de composés de formule A selon la revendication 1, **caractérisée en ce que** les composés sont des allylamides de l'acide carbonique, oxalique, malonique, succinique, adipique, citrique ou butanetétra-carboxylique, spécifiquement la N,N'-diallylurée, le N,N'-diallyloxalamide, le N,N'-diallylmalonamide, le N,N'-diallylsuccinamide, le N,N'-diallyladipamide, le triamide de l'acide N,N',N"-triallylcitrique, le N,N',N",N‴-tétraallylbutanetetracarboxamide, le N,N'-diallyldodécanediamide ou le N,N'-diallyloctadécanediamide.

3. Utilisation de composés de formule B selon la revendication 1, **caractérisée en ce que** les composés sont le 2,2-diallylmalonamide et/ou le 2,5-diallyladipamide.

4. Utilisation de composés de formule (A) ou (B) selon la revendication 1 en tant que promoteurs de réticulation dans la réticulation par rayonnement bêta ou gamma de polyamides aliphatiques dans le compoundage, le moulage par injection et l'impression 3D de polyamides aliphatiques.

5. Utilisation selon une ou plusieurs des revendications 1 à 4, **caractérisée en ce que** les additifs agissant en tant que promoteurs de réticulation par rayonnement sont utilisés en une proportion de 2,0 à 6,0 % en poids, de préférence de 3,0 à 5,0 % en poids, chaque fois par rapport au poids du polyamide aliphatique.

6. Utilisation selon une ou plusieurs des revendications 1 à 5, **caractérisée en ce que** les additifs sont utilisés pour la réticulation par rayonnement du polyamide 6, du polyamide 66, du polyamide 6/66 ou du polyamide 12.

7. Utilisation selon une ou plusieurs des revendications 1 à 6, **caractérisée en ce que,** outre les promoteurs de réticulation par rayonnement, d'autres additifs sont ajoutés, en particulier des stabilisants de procédé tels que des phosphites et/ou des agents de nucléation.
